(19) Europäisches Patentamt / European Patent Office / Office européen des brevets

(11) **EP 1 755 116 A2**

(12) **EUROPEAN PATENT APPLICATION**

(43) Date of publication:
**21.02.2007 Bulletin 2007/08**

(51) Int Cl.:
***G11B 7/135*** (2006.01)

(21) Application number: **06118714.2**

(22) Date of filing: **10.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.08.2005 KR 20050074930**

(71) Applicant: **SAMSUNG ELECTRONICS CO., LTD.**
**Suwon-si,**
**Gyeonggi-do (KR)**

(72) Inventors:
 • **Hong, Tao**
  **Gyeonggi-do (KR)**
 • **Kim, Tae-kyung**
  **Seoul (KR)**
 • **Choi, Woo-seok**
  **Seoul (KR)**
 • **Chung, Chong-sam**
  **Gyeonggi-do (KR)**

(74) Representative: **Brandon, Paul Laurence**
**APPLEYARD LEES**
**15 Clare Road**
**Halifax HX1 2HY (GB)**

(54) **Optical pickup apparatus capable of detecting and compensating for spherical aberration caused by thickness variation of recording layer**

(57) An optical pickup apparatus, including a light source (11) to emit light, an objective lens (16) to form a light spot on an optical recording medium by focusing the light emitted from the light source, an optical division unit (13), disposed between the light source and the objective lens, to divide the light emitted from the light source into a main beam and two subbeams to form one main spot and two subspots on the optical recording medium, the optical division unit having a first area and a second area surrounding the first area, a detector (20) to detect the amount of light of the main beam and the amount of light of the respective subbeams reflected from the optical recording medium, a beam splitter (14) disposed between the light source and the objective lens to allow the light reflected from the optical recording medium to be directed to the detector, signal generating circuits to generate a tracking error signal (TES), a focusing error signal (FES), and a spherical aberration signal (SAS), respectively, in response to the output of the detector, and a spherical aberration compensation unit (15), disposed between the objective lens and the beam splitter, to compensate for spherical aberration using the SAS generated by the signal generating circuits.

FIG. 3

EP 1 755 116 A2

**Description**

The present invention relates to optical pickup apparatus.

As the information recording industry develops, the amount of data to be processed and recorded to and from various optical recording media increases. Thus, an optical recording medium having higher recording density is required. To realize an optical recording medium having high capacity, the size of a light spot focused on the optical recording medium must be reduced. In general, in order to reduce the size of the light spot, light having a shorter wavelength is used, and the numerical aperture (NA) of an objective lens is increased. For example, a light source to emit light having a wavelength of 405 nm and an objective lens having a NA of 0.85 have been used in a blu-ray disc (BD) system.

In a general optical recording medium, transparent substrates are formed on top and bottom surfaces of an information recording layer, respectively, so that the information recording layer is protected from dust or scratches. The information recording layer may be either a single layer or a double layer so that an optical recording medium having high information storage capacity may be provided. In the case of a multi-layered optical recording medium, a spacer layer is disposed between two adjacent recording layers to separate the two recording layers from each other.

In order to record or reproduce information to or from the single-layered optical recording medium having the above structure, light is focused on the recording layer of the optical recording medium using an optical pickup apparatus and light reflected from the recording layer is analyzed. In this procedure, light passes through the transparent substrate and is incident on the recording layer. In the case of the multi-layered optical recording medium, light sequentially passes through the transparent substrate, to record or reproduce information to or from the lower recording layer, the upper recording layer, and the spacer layer and is incident on the lower recording layer. However, if the thickness of the recording layer varies even slightly due to an error in a manufacturing process or a variation of the recording layer, spherical aberration occurs.

Here, the thickness of the recording layer is defined by the distance from the incident surface of the recording medium. In general, the spherical aberration is proportional to the variation in the thickness of the recording layer and the fourth power of the NA of the objective lens. This spherical aberration causes the performance of a system for recording and/or reproducing information to degrade. In particular, in a system using an objective lens having a large NA to increase recording density, the effect of the spherical aberration is very large. Thus, an optical pickup apparatus to detect and to compensate for spherical aberration caused by thickness variation of a recording layer is required.

FIG. 1 is a schematic view of a conventional optical pickup apparatus disclosed in U.S. Patent Publication No. US2002/41542. The conventional optical pickup apparatus of FIG. 1 includes a light source 101, a collimating lens 102, a diffraction grating 112, a beam splitter 103, a lens combination 104 including convex and concave lenses, an objective lens 105, an actuator 106, a hologram optical element (HOE) 108, a convergence lens 109, a cylinder lens 110, and a detector 111.

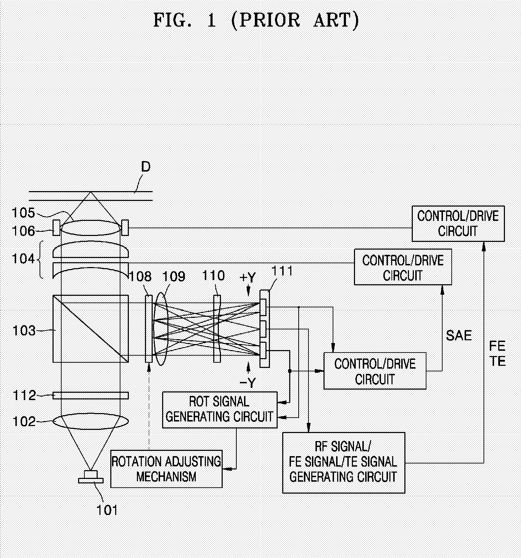

In the optical pickup apparatus of FIG. 1, light emitted from the light source 101 is collimated by the collimating lens 102 and is then incident on the diffraction grating 112. Light diffracted by the diffraction grating 112 is divided into three types of light, that is, zeroth diffraction light and ±first diffraction light, passes through the beam splitter 103 and the lens combination 104, and is then focused on a recording layer of an optical recording medium D. In this case, the zeroth diffraction light focused by the objective lens 105 forms a main spot, and the ±first diffraction light focused by the objective lens 105 forms first and second subspots on opposite sides of the main spot. The main spot is disposed on one track of the optical recording medium D, and the first and second subspots are disposed in a space between the track on which the main spot is focused and the tracks adjacent to the track on which the main spot is focused.

The light is reflected from a recording layer of the optical recording medium D and passes through the objective lens 105 and the lens combination 104, and is then reflected by the beam splitter 103 and incident on the HOE 108. The HOE 108 transmits most incident light linearly and diffracts the remaining incident light. In particular, the HOE 108 transmits most of the zeroth diffraction light linearly, and diffracts a portion of the zeroth diffraction light to form third and fourth subspots. Then, the main spot and the first through fourth subspots are converged by the convergence lens 109, pass through the cylinder lens 110 and are incident on the detector 111. At this time, the cylinder lens 110 provides astigmatism to each light beam using a general astigmatism method to obtain a focusing error signal.

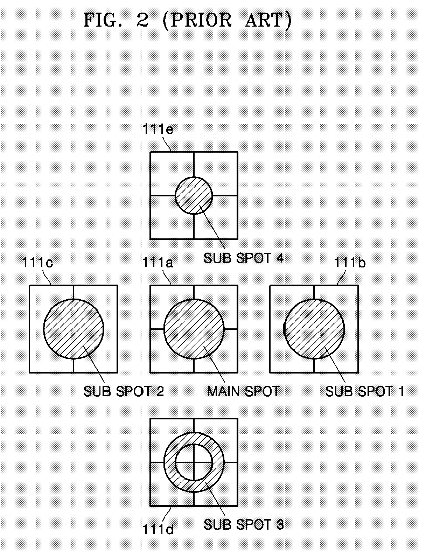

FIG. 2 shows patterns of beam spots received by the detector 111. As shown in FIG. 2, the detector 111 includes 5 quad-detectors 111a-111e. The main spot and the first through fourth subspots are respectively received by the quad-detectors 111a-111e. In this case, the output of the quad-detectors 111a-111c, which each receive the main spot and the first and second subspots, is used to obtain a tracking error signal, a focusing error signal, and an RF signal to reproduce information recorded on the optical recording medium D using a general differential push-pull (DPP) method. The tracking error signal and the focusing error signal are used to control the actuator 106 using a control and/or drive circuit. In addition, a spherical aberration signal that is generated due to a thickness variation of the optical recording medium D is obtained using the output of the quad-detectors 111d-111e, which receive the third and fourth subspots. The control and/or drive circuit controls an interval between the convex lens and the concave lens of the lens combination 104 using the spherical aberration signal so that the spherical aberration may be minimized.

However, in the conventional optical pickup apparatus disclosed in U.S. Patent Publication No. US2002/41542, the diffraction grating 112 and the HOE 108 are used to detect the spherical aberration caused by a thickness variation of the recording layer. Thus, optical efficiency is degraded due to an increase in the number of optical elements, and a plurality of relatively high-priced photodetectors should be used.

U.S. Patent No. 6,661,750 also discloses an optical pickup apparatus which detects spherical aberration caused by thickness variation of a recording layer. However, in the optical pickup apparatus of the '750 patent, a spherical aberration signal is affected by a defocusing of the optical pickup apparatus. Thus, even when only slight defocusing occurs where there is no thickness variation, the spherical aberration signal is generated and precise correction of the spherical aberration is difficult.

In addition, in an optical pickup apparatus disclosed in U.S. Patent No. 6,807,133, an octagonal HOE with a complicated structure is used and the structure of a detector is also complicated, and fabrication of the optical pickup apparatus is difficult.

An aim of preferred embodiment of the present invention is to provide an optical pickup apparatus which detects and compensates for spherical aberration caused by a thickness variation of a recording layer of an optical recording medium, has a relatively simple structure, is not affected by defocusing, and is fabricated at relatively low costs.

According to an aspect of the present invention, there is provided an optical pickup apparatus, including a light source to emit light, an objective lens to form a light spot on an optical recording medium by focusing the light emitted from the light source, an optical division unit, disposed between the light source and the objective lens, to divide the light emitted from the light source into a main beam and two subbeams to form one main spot and two subspots on the optical recording medium, the optical division unit having a first area and a second area surrounding the first area, a detector to detect the amount of light of the main beam and the amount of light of the respective subbeams reflected from the optical recording medium, a beam splitter disposed between the light source and the objective lens to allow the light reflected from the optical recording medium to be directed to the detector, signal generating circuits to generate a tracking error signal (TES), a focusing error signal (FES), and a spherical aberration signal (SAS), respectively, in response to the output of the detector, and a spherical aberration compensation unit, disposed between the objective lens and the beam splitter, to compensate for spherical aberration using the SAS generated by the signal generating circuits.

The main spot and the two subspots formed by the optical division unit may be arranged in a line on the same track of the recording layer of the optical recording medium, and the subspots may be disposed on front and rear sides of the main spot, respectively.

The optical division unit may be a hologram optical element (HOE) and the main beam may be a zeroth-diffracted beam and the subbeams may be ±first-diffracted beams having a smaller amount of light than the main beam. The two subbeams formed by the HOE may have the same amount of light, one of the subspots may be adjacent to an optical axis and has a circular cross-section, and the other subspot may be farther from the optical axis than the subspot adjacent to the optical axis and may have an annular cross-section. A surface of the HOE may be divided into a first circular area and a second area formed outside of the first area, and different diffraction gratings having different grating intervals may be formed in the first and second areas, respectively.

The HOE may be disposed between the light source and the beam splitter. The HOE may be a polarization-HOE (p-HOE), may be disposed between the objective lens and the beam splitter, and may selectively diffract only light head toward the optical recording medium.

The detector may include a main spot quad-detector measuring the amount of light of the main beam reflected from the optical recording medium and two subspot quad-detectors measuring the amount of light of the two subbeams reflected from the optical recording medium.

The optical pickup apparatus may further include an astigmatism lens disposed between the beam splitter and the detector, wherein the astigmatism lens provides astigmatism to light reflected from the optical recording medium and incident on the detector.

The signal generation units may include an RF/FES circuit generating the FES and an RF signal, a TES circuit generating the TES, and an SAS circuit generating the SAS.

The main spot detector may be divided into 2 x 2 segments, and the RF/FES circuit may generate the RF signal by adding the amount of light measured in each of the segments of the main spot quad-detector and generate an FES using a difference in the sum of the amount of light measured in two of the segments arranged along a diagonal direction and the sum of the amounts of light measured in two segments in the other diagonal direction.

The SAS circuit may generate an SAS using a difference in the FESs of the two subspots calculated by the two subspot quad-detectors, respectively.

The TES circuit may generate a TES using a difference between a push-pull signal generated by the main spot quad-detector and a push-pull signal generated by the two subspot quad-detectors.

The spherical aberration compensation unit may be a liquid crystal panel or a beam expander generating spherical aberration in a direction opposite to spherical aberration caused by a thickness variation of the recording layer of the optical recording medium.

The optical pickup apparatus may further include an actuator driving the objective lens in response to the TES and the FES respectively generated by the signal generation circuits, and a collimating lens collimating light emitted from the light source as a parallel beam.

According to another aspect of the present invention, there is provided an optical recording and/or reproducing system, comprising a driving unit to mount and to rotate an optical recording medium, an optical pickup installed to move in a radial direction of the optical recording medium and to record and reproduce information to or from the optical recording medium, and a controller to control focusing and tracking servos of the optical pickup unit, wherein the optical pickup detects and compensates for spherical aberration caused by a thickness variation of a recording layer of the optical recording medium, and wherein the optical pickup further comprises a light source to emit light, an objective lens to form a light spot on an optical recording medium by focusing the light emitted from the light source, an optical division unit, disposed between the light source and the objective lens, to divide the light emitted from the light source into a main beam and two subbeams to form one main spot and two subspots on the optical recording medium, the optical division unit having a first area and a second area surrounding the first area, a detector to detect the amount of light of the main beam and the amount of light of the respective subbeams reflected from the optical recording medium, a beam splitter disposed between the light source and the objective lens to allow the light reflected from the optical recording medium to be directed to the detector, signal generating circuits to generate a tracking error signal (TES), a focusing error signal (FES), and a spherical aberration signal (SAS), respectively, in response to the output of the detector, and a spherical aberration compensation unit, disposed between the objective lens and the beam splitter to compensate for spherical aberration using the SAS generated by the signal generating circuits.

Additional and/or other aspects of the invention will be set forth in part in the description which follows and, in part, will be obvious from the description, or may be learned by practice of the invention.

The present invention will become apparent and more readily appreciated from the following description of the embodiments, taken in conjunction with the accompanying drawings of which:

FIG. 1 is a schematic view of a conventional optical pickup apparatus for detecting and compensating for spherical aberration caused by a thickness variation of a recording layer;

FIG. 2 shows a photodetector of the conventional optical pickup apparatus of FIG. 1 and patterns of beam spots received by the photodetector;

FIG. 3 is a schematic view of an optical pickup apparatus according to an embodiment of the present invention;

FIG. 4 is a front view of a hologram optical element (HOE) used in the optical pickup unit of FIG. 3 according to an embodiment of the present invention;

FIG. 5 is a schematic view of a photodetector of the optical pickup apparatus of FIG. 3 according to an embodiment of the present invention, patterns of light spots formed on the photodetector, and peripheral circuits which are connected to the photodetector to obtain a tracking error signal (TES) and a spherical aberration signal (SAS);

FIG. 6 is a graph of SAS versus thickness variation of a recording layer in the optical pickup apparatus of FIG. 3 according to an embodiment of the present invention;

FIG. 7 is a graph of TES in the optical pickup apparatus of FIG. 3 according to an embodiment of the present invention;

FIG. 8 is a graph of SAS versus thickness variation of the optical recording layer when an objective lens is shifted in the optical pickup apparatus of FIG. 3 according to an embodiment of the present invention;

FIG. 9 is a graph of TES when the objective lens is shifted in the optical pickup apparatus of FIG. 3 according to an embodiment of the present invention; and

FIG. 10 is a schematic view of an optical recording and/or reproducing system having the optical pickup of FIG. 3 according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

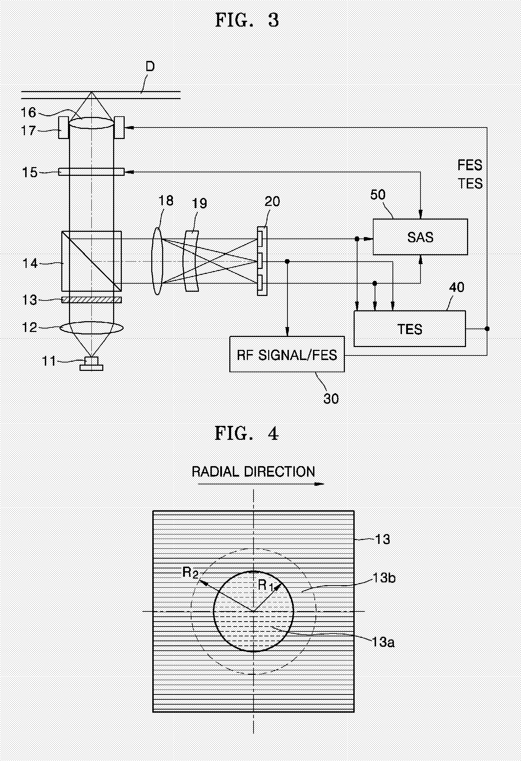

FIG. 3 is a schematic view of an optical pickup apparatus according to an embodiment of the present invention. As shown in FIG. 3, the optical pickup apparatus includes a light source 11 that emits light, a collimating lens 12 that collimates the light emitted from the light source 11, an objective lens 16 that forms a light spot on an optical recording medium D such as an optical disc by focusing the collimated beam, an optical division unit 13 that is disposed between the light source 11 and the objective lens 16 and divides the collimated beam into a main beam and a subbeam, a detector 20 that detects the amount of light reflected from the optical recording medium D, a beam splitter 14 that is disposed between the light source 11 and the objective lens 16 and allows light reflected from the optical recording medium D to be directed to the detector 20, signal generating circuits 30, 40, and 50 that generate a focusing error signal (FES), a tracking error signal (TES), and a spherical aberration signal (SAS), respectively, in response to the output of the detector 20, and a spherical aberration compensation unit 15 that is disposed between the objective lens 16 and the beam splitter 14 and compensates for spherical aberration caused by a thickness variation using the SAS generated by the signal generating circuit 50. The signal generation circuits 30, 40, and 50 include an RF/FES circuit 30, which generates the FES and an RF signal, a TES circuit 40, which generates the TES, and a SAS circuit 50, which generates the SAS. In addition, the optical pickup apparatus further includes an actuator 17, which drives the tracking/focusing of the objective lens 16 in response to the TES and the FES.

The light source 11 may be a semiconductor laser element, such as a laser diode, which emits light with a predetermined wavelength. For example, a semiconductor laser element, which emits blue light having a short wavelength of about 405nm, may be used as the light source 11. Further, light emitted from the light source 11 may be divergent. Such a problem is solved by the collimating lens 12, which transforms the light into a parallel beam. The light that passes through the collimating lens 12 and is transformed into the parallel beam is incident on the optical division unit 13, as shown in FIG. 3.

According to the embodiment shown in FIG. 3, the optical division unit 13 includes a hologram optical element (HOE), for example. The HOE divides incident light into a plurality of beams of diffracted light and controls the amount of light diffracted according to the shape of diffraction patterns formed on the surface of the HOE.

FIG. 4 is a front view of the HOE 13 used in the optical pickup apparatus according to an embodiment of the present embodiment. As shown in FIG. 4, the surface of the HOE 13 is divided into an area 13a formed inside of a radius $R_1$ and an area 13b formed outside of the radius $R_1$. Different diffraction gratings having different grating intervals are formed in the two areas 13a and 13b of the HOE 13. Here, $R_2$ is the radius of an area in which the parallel beam, which has passed through the collimating lens 12, is incident. In this structure, the parallel beam incident on the HOE 13 is divided into a zeroth-diffracted main beam and two $\pm$first-diffracted subbeams having less light than the main beam. In this case, the main beam emitted from the HOE 13 is a parallel beam having a circular cross-section with a radius of $R_2$. In addition, one of the $\pm$first-diffracted subbeams is adjacent to the optical axis and has a circular cross-section with a radius of R1, and the other $\pm$first-diffracted subbeam is farther from the optical axis and has an annular cross-section with an inner radius of $R_1$ and an outer radius of $R_2$. The amounts of light in the two subbeams may be substantially similar so that a spherical aberration signal and the thickness variation of the recording layer of the optical recording medium D have a linear proportional relationship. To this end, the ratio of the radius $R_1$ to the radius $R_2$ may be about 0.75.

The main beam and the subbeams formed by the HOE 13 pass through the beam splitter 14 and the spherical aberration compensation unit 15, which will be described later, and are incident on the objective lens 16. The objective lens 16 forms a light spot on the optical recording medium D by focusing the main beam and the subbeams. Hereinafter, the light spot produced by the main beam is referred to as "a main spot," and light spots produced by the subbeams are referred to as "subspots." In general, the recording layer of the optical recording medium D has a plurality of spiral tracks that travel around the optical recording medium D. The main spot and the subspots formed by the objective lens 16 are disposed in a line on one of the tracks. In particular, the subspots are respectively disposed on front and rear sides of the main spot.

In this way, the main beam and the subbeams focused on the optical recording medium D are reflected and diffracted at the track of the recording layer, and then pass through the objective lens 16 and the spherical aberration compensation unit 15 and are incident on the beam splitter 14. The beam splitter 14 reflects light reflected from the optical recording medium D toward the detector 20. Light reflected by the beam splitter 14 is focused on the detector 20 by the convergence lens 18 and form a main spot and subspots. In this case, astigmatism of about 45°is given to the main spot and the subspots formed on the detector 20 by an astigmatism lens 19.

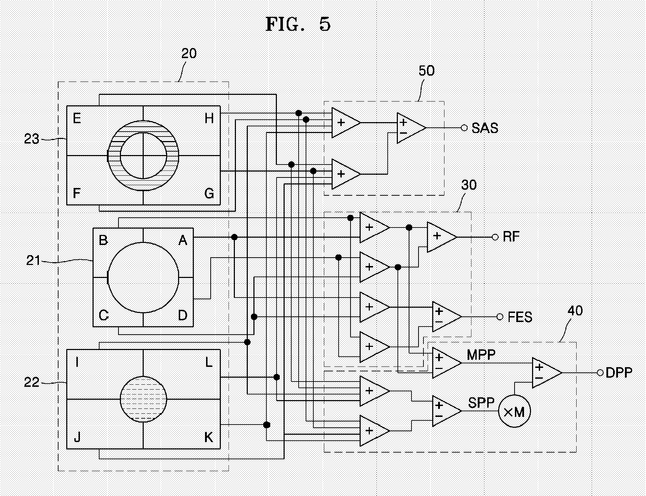

The detector 20 may include three quad-detectors 21, 22, and 23 to respectively detect the main spot and the two subspots, for example. In other embodiments of the invention, additional quad-detectors may be employed. FIG. 5 shows patterns of light spots formed on the three quad-detectors 21, 22, and 23. As shown in FIG. 5, each of the quad-detectors 21, 22, and 23 is divided into four segments and separately detects the amount of light from each segment. In FIG. 5, the main spot quad-detector 21 detects the amount of light in the main spot, and the upper and lower subspot quad-detectors 22 and 23 respectively detect the amount of light in two subspots. The TES and the FES to track and focus drive the objective lens 16, the SAS to correct spherical aberration caused by a thickness variation of the recording layer, and the RF signal to reproduce information recorded on the optical recording medium D may be obtained from the amount of light respectively detected by the quad-detectors 21, 22, and 23.

The FES may be calculated using a difference in the amount of light detected by segments of the main spot quad-detector 21 in different diagonal directions. As is described above, astigmatism of 45°, which is diagonal, is given to the light spots formed on the detector 20 by the astigmatism lens 19. When light is precisely focused on the recording layer of the optical recording medium D, the light spots formed on the detector 20 are almost circular. However, when light is not precisely focused on the recording layer of the optical recording medium D, oval-shaped light spots disposed at an oblique angle in the diagonal direction are formed on the detector 20 due to the astigmatism. Thus, a focusing error of the objective lens 16 is indicated by a difference in the amount of light measured in each of two segments of the main spot quad-detector 21 in the diagonal direction. That is, the FES may be calculated using Equation 1.

$$FES = A + C - B - D \qquad (1),$$

where A, B, C, and D represent the amount of light measured in the corresponding segments of the main spot quad-detector 21 indicated by the letters.

In addition, the RF signal to reproduce information recorded on the recording optical medium D represents the sum of the amounts of light measured in the respective segments of the main spot quad-detector 21, as defined in Equation 2.

$$RF = A + C + B + D \qquad (2)$$

The thickness variation of the recording layer of the optical recording medium D is measured as a difference in the FESs of the two subspots disposed on front and rear sides of the main spot on one track of the recording layer. That is, when there is no thickness variation of the recording layer, the FESs calculated from each of the subspots disposed on the front and rear sides of the main spot are determined to be substantially similar. However, when there is a thickness variation of the recording layer, the depth of focusing is different for the two subspots. Thus, the FESs of the two subspots are different. The difference in the FESs of the two subspots is also proportional to the amount of a thickness variation of the recording layer. In Equation 3, the SAS caused by a thickness variation of the recording layer is calculated from the amount of light detected in each of the segments of the subspot quad-detectors 22 and 23.

$$SAS = FES_1 - FES_2 = (F + H - E - G) - (J + L - I - K) \qquad (3),$$

where the value of E-L represents the amount of light measured in the corresponding segments of the subspot quad-detectors 22 and 23 indicated by the letters.

The main spot and the subspots formed on the optical recording medium D are reflected by the track of the recording layer and are simultaneously diffracted by an edge of the track. When the main spot and the subspots formed on the optical recording medium D are precisely disposed in the center of the track, diffraction patterns of the light spots formed on the detector 20 are substantially symmetrical with each other. However, when the main spot and the subspots formed on the optical recording medium D are not precisely disposed in the center of the track, diffraction patterns of the light spots formed on the detector 20 are not symmetrical. Thus, the TES may be obtained from a difference in the amount of light measured in the upper and lower segments of the quad-detectors 21, 22, and 23 using a differential push-pull (DPP) method. That is, the TES may be calculated using Equation 4.

$$TES = MPP - M \times SPP$$

$$= (A + B - C - D) - M \times [(E + H - F - G) + (I + L - J - K)] \qquad (4),$$

where MPP is a push-pull signal generated by a main spot, SPP is a push-pull signal generated by subspots, and M is a coefficient compensating for a difference in the amounts of light in the main spot and the subspots.

Referring to FIG. 5, the RF/FES circuit 30 to generate the FES and the RF signal, the TES circuit 40 to generate the TES, and the SAS circuit 50 to generate the SAS include a plurality of adders and differential circuits.

The FES and the TES obtained in this manner are transmitted to the actuator 17 and are used in the focusing and tracking control of the objective lens 16 when information is recorded or reproduced from the optical recording medium D. In addition, the SAS is transmitted to the spherical aberration compensation unit 15 and is used to compensate for the spherical aberration caused by a thickness variation of the recording layer. The spherical aberration compensation unit 15 may be a liquid crystal panel or a beam expander, for example. That is, spherical aberration in an opposite direction is generated by the liquid crystal panel or the beam expander so that the spherical aberration caused by a variation in the distance from the surface of the optical recording medium D to the recording layer is compensated for. A method of compensating for spherical aberration using the liquid crystal panel or the beam expander is well-known technology. Thus, a detailed description thereof will be omitted.

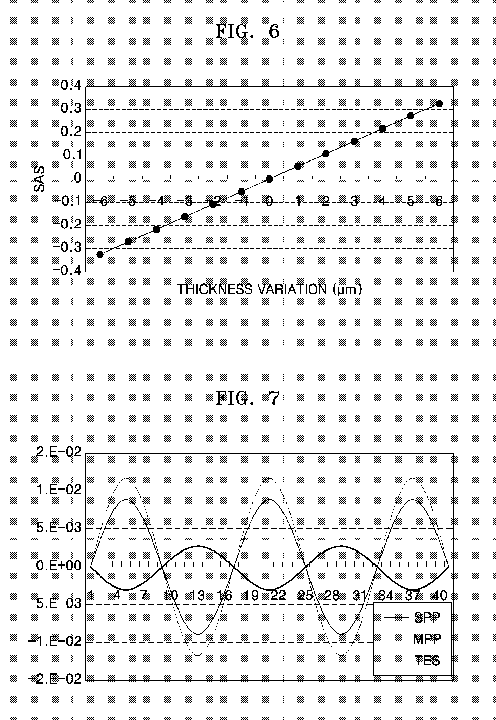

FIG. 6 is a graph of the SAS versus the thickness variation of a recording layer in the optical pickup apparatus according to an embodiment of the present invention. As shown in FIG. 6, the SAS is linearly proportional to the thickness variation of the recording layer. FIG. 7 shows a TES generated while the objective lens 16 crosses the track of the recording layer. In FIG. 7, when the optical spot focused by the objective lens 16 is precisely disposed in the center of the track or in the space between tracks, the TES is 0. Thus, the position of the light spot with respect to the track may be known from a value of the TES shown in the graph of FIG. 7.

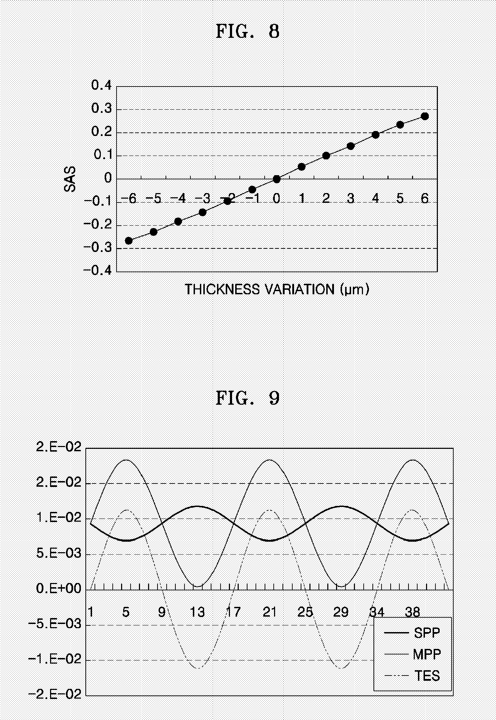

FIGS. 8 and 9 are graphs of SAS and TES when the objective lens 16 is shifted a predetermined distance (for example, about 2mm) toward an edge of a track. Referring to FIG. 8, in the optical pickup apparatus shown in FIG. 3, even if the objective lens 16 is shifted, the SAS is not affected by the shift. Thus, a precise SAS may always be obtained. Referring to FIG. 9, when the objective lens 16 is shifted, MPP, which is a push-pull signal generated by a main spot, and SPP, which is a push-pull signal generated by subspots, are offset by a predetermined value, but an offset does not occur in the TES obtained from a difference in the two signals, MPP and SPP. Thus, in the optical pickup apparatus shown in FIG. 3, even if the objective lens 16 is shifted, a precise TES may always be obtained.

In the optical pickup apparatus illustrated in FIG. 3, since a main spot and since two subspots are formed on the same track of the recording layer, the principle of the present invention may be applied in any optical recording medium with a land or groove shape (e.g., the principle may be applied to DVD-RWs, DVD-RAMs, HDDVD-RWs, or BD-RWs).

In addition, since the two subspots formed by the HOE 13 have a substantially similar amount of light, even if a little defocusing occurs in the optical pickup apparatus, the two subspots are hardly affected by the effect of defocusing. However, even if the two subspots having a substantially similar amount of light are affected by defocusing, since the SAS is obtained using a difference (that is, SAS = $FES_1$ - $FES_2$) of FESs of the two subspots, the effect of defocusing is offset. Thus, even if defocusing occurs in the optical pickup apparatus, the SAS caused by a thickness variation of the recording layer may be precisely calculated.

Although the HOE 13 is disposed between the light source 11 and the beam splitter 14 in FIG. 3, the HOE 13 may also be disposed between the beam splitter 14 and the objective lens 16. In this case, the HOE 13 diffracts only light incident on the optical recording medium D and does not affect light reflected from the optical recording medium D. In this case, a polarization-HOE (p-HOE) may be used as the HOE 13.

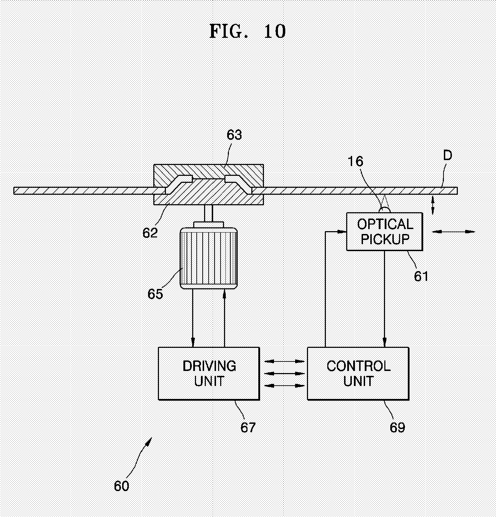

FIG. 10 is a schematic view of an optical recording and/or reproducing system 60 having the optical pickup of FIG. 3 according to an embodiment of the present invention. Referring to FIG. 10, the optical recording and/or reproducing system 60 having the optical pickup according to an embodiment of the present invention includes a spindle motor 65 which rotates the optical recording medium D, such as a CD, DVD, or BD, an optical pickup 61 which moves in a radial direction of the optical recording medium D and records or reproduces information to or from the optical recording medium D, a driving unit 67 which drives the spindle motor 65, and a control unit 69 which controls focusing and tracking servos of the optical pickup 61. Reference numerals 62 and 63 denote a turntable on which the optical recording medium D is mounted and a clamp which chucks the optical recording medium D, respectively.

As is described above, the optical pickup 61 includes the optical system having the objective lens 16 to focus light emitted from the light source onto the optical recording medium D, the actuator to drive the objective lens 16, and the signal generation circuits 30, 40, and 50 to generate an FES, a TES, an SAS, and an RF signal.

Light reflected from the optical recording medium D is detected by a photodetector disposed in the optical pickup 61 and photoelectrically transformed into the above-described electrical signals, and the electrical signals are input to the control unit 69. The control unit 69 controls the rotation speed of the spindle motor 65 using the driving unit 67 and controls the focusing and tracking of the optical pickup 61 based on a signal input from the optical pickup 61. In addition, the control unit 69 reproduces the information recorded on the optical recording medium D based on an RF signal input from the optical pickup 61.

As is described above, in the optical pickup apparatus according to preferred embodiments of the present invention, spherical aberration caused by a thickness variation of the recording layer of the optical recording medium may be detected and compensated for using a relatively simple structure. In addition, even when defocusing occurs in the optical pickup apparatus, an SAS is not affected by the defocusing, and, thus, a thickness variation of the recording layer may be precisely detected, and when the objective lens is shifted, a TES is not affected by the shift. Furthermore, the optical pickup apparatus according to aspects of the present invention has a simple structure and uses a small number of high-priced components, and, thus, may be fabricated at a relatively low price.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An optical pickup, comprising:

   a light source (11) to emit light;
   an objective lens (16) to form a light spot on an optical recording medium (D) by focusing the light emitted from the light source;
   an optical division unit (13), disposed between the light source and the objective lens, to divide the light emitted from the light source into a main beam and two subbeams to form one main spot and two subspots on the optical recording medium, the optical division unit having a first area and a second area surrounding the first area;
   a detector (20) to detect the amount of light of the main beam and the amount of light of the respective subbeams reflected from the optical recording medium;
   a beam splitter (14) disposed between the light source and the objective lens to allow the light reflected from the optical recording medium to be directed to the detector;
   signal generating circuits (30, 40, 50) to generate a tracking error signal (TES), a focusing error signal (FES), and a spherical aberration signal (SAS), respectively, in response to the output of the detector; and
   a spherical aberration compensation unit (15), disposed between the objective lens and the beam splitter, to compensate for spherical aberration using the SAS generated by the signal generating circuits.

2. The optical pickup according to claim 1, wherein the main spot and the two subspots formed by the optical division unit (13) are arranged in a line on a same track of the recording layer of the optical recording medium (D), and the subspots are disposed on front and rear sides of the main spot, respectively.

3. The optical pickup according to claim 2, wherein the optical division unit (13) comprises a hologram optical element (HOE), the main beam is a zeroth-diffracted beam, and the subbeams are ±first-diffracted beams having a smaller amount of light than the main beam.

4. The optical pickup according to claim 3, wherein the two subbeams formed by the HOE (13) have the same amount of light, a first subspot is adjacent to an optical axis and has a circular cross-section, and a second subspot is farther from the optical axis than the first subspot and has an annular cross-section.

5. The optical pickup according to claim 3 or claim 4, wherein a surface of the HOE (13) is divided into a first circular area (13a) and a second area (13b) formed outside of the first area, and different diffraction gratings, having different grating intervals, are formed in the first and second areas, respectively.

6. The optical pickup according to anyone of claims 3 - 5, wherein the HOE (13) is disposed between the light source (11) and the beam splitter (14).

7. The optical pickup according to any one of claims 3 - 5, wherein the HOE (13) is a polarization-HOE (p-HOE), is disposed between the objective lens(16) and the beam splitter (14), and selectively diffracts only light heading to the optical recording medium (D).

8. The optical pickup according to any preceding claims, wherein the detector (20) comprises:

   a main spot quad-detector (21) to measure the amount of light of the main beam reflected from the optical recording medium (D) ; and
   two subspot quad-detectors (22, 23) to measure the amount of light of the two subbeams reflected from the optical recording medium.

9. The optical pickup according to claim 8, further comprising an astigmatism lens (19), disposed between the beam splitter (14) and the detector (20), to provide astigmatism to light reflected from the optical recording medium (D) and incident on the detector.

10. The optical pickup according to claim 8 or claim 9, wherein the signal generation units (30, 40, 50) include a radio frequency/focusing error signal (RF/FES) circuit (30) to generate the FES and an RF signal, a tracking error signal (TES) circuit (40) to generate the TES, and a spherical aberration signal (SAS) circuit (50) to generate the SAS for the main beam and the two subbeams.

11. The optical pickup according to claim 10, wherein the main spot detector (21) is divided into 2 x 2 segments, and the RF/FES circuit (30) generates the RF signal by adding the amount of light measured in each of the segments of the main spot quad-detector and generates the FES using a difference in the sum of the amount of light measured in two of the segments arranged along a diagonal direction and the sum of the amounts of light measured in two segments in the other diagonal direction.

12. The optical pickup according to claim 10 or claim 11, wherein the SAS circuit (40) generates the SAS using a difference in the FESs of the two subspots calculated by the two subspot quad-detectors (22, 23), respectively.

13. The optical pickup according to any one of claims 10 - 12, wherein the TES circuit (50) generates the TES using a difference between a push-pull signal generated by the main spot quad-detector (21) and a push-pull signal generated by the two subspot quad-detectors (22, 23).

14. The optical pickup according to any preceding claims, wherein the spherical aberration compensation unit (15) comprises a liquid crystal panel or a beam expander to generate spherical aberration in a direction opposite to spherical aberration caused by the thickness variation of the recording layer of the optical recording medium (D).

15. The optical pickup according to any preceding claims, further comprising an actuator (17) to drive the objective lens (16) in response to the tracking error signal (TES) and the focusing error signal (FES) generated by the respective ones of the signal generation circuits (40, 50).

16. The optical pickup according to any preceding claims, further comprising a collimating lens (12) to collimate the light emitted from the light source (11) as a parallel beam.

17. An optical recording and/or reproducing system, comprising:

a driving unit (67) to mount and to rotate an optical recording medium (D);
an optical pickup (61) installed to move in a radial direction of the optical recording medium and to record and/or reproduce information to and/or from the optical recording medium; and
a controller (69) to control focusing and tracking servos of the optical pickup unit, wherein the optical pickup detects and compensates for spherical aberration caused by a thickness variation of a recording layer of the optical recording medium, and wherein the optical pickup is according to any one of claims 1 - 16.

# FIG. 1 (PRIOR ART)

## FIG. 2 (PRIOR ART)

111e

SUB SPOT 4

111c      111a      111b

SUB SPOT 2      MAIN SPOT      SUB SPOT 1

111d      SUB SPOT 3

## FIG. 3

## FIG. 4

RADIAL DIRECTION

FIG. 5

EP 1 755 116 A2

FIG. 6

FIG. 7

## FIG. 8

## FIG. 9

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 200241542 B
- US 6661750 B

- US 6807133 B